# FASCICULE DE BREVET EUROPEEN

(11) **EP 3 142 799 B1**
(45) Date de publication et mention de la délivrance du brevet: **04.07.2018**
(21) Numéro de dépôt: 15725842.7
(22) Date de dépôt: 11.05.2015
(51) Int. Cl.: B05B 13/04

(54) **PROCÈDE D'ENDUCTION A VISUALISATION TEMPS RÉEL**
ECHTZEITDARSTELLUNG DES BESCHICHTUNGSPROZESSES
REALTIME VISUALISATION OF COATING PROCESS

(30) Priorité: 12.05.2014 FR 1454203
(43) Date de publication de la demande: 22.03.2017
(73) Titulaire: PSA Automobiles SA, 78300 Poissy (FR)
(72) Inventeur: PEREZ, Mathieu, 92400 Courbevoie (FR)
(74) Mandataire: Fosse, Danièle
(86) Numéro de dépôt international: PCT/FR2015/051227
(87) Numéro de publication internationale: WO 2015/173501

(56) Documents cités:
- EP-A1- 1 380 353
- EP-A2- 2 674 225
- WO-A1-2013/175392

## Description

L'invention a trait au domaine de la fabrication des véhicules automobiles, et plus précisément à l'enduction (notamment mise en peinture ou mise en étanchéité) des carrosseries des véhicules automobiles.

L'enduction est couramment réalisée de manière automatisée au moyen de robots. Les carrosseries sont fixées sur des chariots ou suspendues à des portiques, qui sont amenés au défilé (de manière continue ou séquentielle) à des postes d'enduction où des robots munis de buses procèdent à l'application de l'enduit (notamment peinture ou produit d'étanchéité) par pulvérisation.

L'application d'un enduit est une opération délicate, car les pièces de carrosserie sont des pièces tridimensionnelles aux formes complexes, munies de reliefs et d'ouvertures. Pour appliquer la juste quantité d'enduit, il est donc nécessaire de faire suivre aux buses des trajectoires optimisées, calculées en fonction de la topographie de la pièce à enduire.

On connaît des techniques d'enduction dans lesquelles le robot suit préalablement à la mise en série une phase d'apprentissage lors de laquelle sont acquises les coordonnées tridimensionnelles d'une buse tenue à la main par un opérateur lors d'une enduction manuelle de la pièce à enduire, cf. par ex. la demande internationale WO2013/175392 ou WO 2012/150485.

Cette technique ne résout nullement le problème de l'optimisation des trajectoires, puisqu'elle ne fait que reproduire les gestes de l'opérateur lors de la phase d'apprentissage. Or rien ne permet de certifier que les gestes de l'opérateur sont optimaux. Au contraire, des erreurs peuvent être introduites, qui se répéteront tout au long de la production de série (variation de la distance entre la buse et la pièce à enduire, vitesse de déplacement de la buse non constante, hésitations, reprises).

C'est pourquoi il est préférable de recourir au calcul et à la simulation numérique. Une autre technique connue, actuellement déployée sur les lignes d'enduction de certains constructeurs, comprend les opérations consistant à :
- déterminer sur la pièce un tracé théorique pour l'application de l'enduit ;
- calculer pour la buse une trajectoire en regard du tracé ainsi déterminé ;
- piloter le robot pour faire suivre à la buse la trajectoire ainsi calculée.

Cette technique permet d'optimiser l'application de l'enduit, dans une certaine mesure cependant.

En effet, la trajectoire calculée ne peut correspondre tout à fait au tracé théorique, car la priorité est donnée à la vitesse de déplacement de la buse plutôt qu'à sa position. En pratique, seule une sélection de points du tracé théorique est introduite dans l'automate (API ou contrôleur) du robot, l'automate procédant ensuite à des interpolations pour calculer sa propre trajectoire.

Il en résulte des décalages entre la trajectoire suivie réellement par le robot (et plus précisément la buse) et le tracé théorique qu'il devrait suivre. Pour s'assurer d'une application correcte de l'enduit, une mise au point est effectuée lors de la phase d'industrialisation (préalablement à la mise en série). Cette mise au point est réalisée manuellement par des opérateurs spécialisés (appelés trajectoiristes) qui procèdent à un recalage de la trajectoire dans le programme de l'automate du robot, en fonction de leur propre appréciation de la qualité de l'application de l'enduit.

Cette technique est meilleure que la précédente, mais elle demeure perfectible car elle repose entièrement sur la capacité du trajectoiriste à correctement évaluer les erreurs supposées de trajectoire, et à correctement reprogrammer celle-ci, sans nécessairement se fonder sur le tracé théorique dont le trajectoiriste n'a, d'ailleurs, pas nécessairement connaissance.

Un premier objectif est de proposer une solution permettant d'optimiser les trajectoires des buses robotisées d'enduction sur les chaînes de production automobile.

Un deuxième objectif est de faciliter le travail des trajectoiristes en minimisant les opérations réalisées au jugé.

Un troisième objectif est de faciliter la détection des erreurs de trajectoire.

A cet effet, il est proposé un procédé d'application d'un enduit sur une pièce de carrosserie d'un véhicule automobile au moyen d'un robot équipé d'une buse pour la pulvérisation de l'enduit, ce procédé comprenant les opérations consistant à :
- déterminer sur la pièce un tracé théorique pour l'application de l'enduit ;
- calculer pour la buse une trajectoire en regard du tracé ainsi déterminé ;
- piloter le robot pour faire suivre à la buse la trajectoire ainsi calculée ;
- restituer sur la pièce de carrosserie, lors de l'application de l'enduit, une image du tracé théorique.

Diverses caractéristiques supplémentaires peuvent être prévues, seules ou en combinaison :
- l'image du tracé théorique peut être restituée directement sur la pièce physique de carrosserie, au moyen d'un appareil de projection d'images placé en regard de celle-ci ;
- l'image du tracé théorique peut être restituée indirectement sur la pièce physique de carrosserie dans un environnement de réalité augmentée, par une technique d'incrustation d'image ;
- l'image du tracé théorique peut être restituée par superposition sur une image de la pièce physique de carrosserie, filmée au moyen d'une caméra ;
- en variante, l'image du tracé théorique peut être restituée par projection sur une surface transparente (tel qu'un verre de lunette) au travers de laquelle est visible la pièce physique de carrosserie, de sorte à être superposée à celle-ci du point de vue d'un observateur dont le regard pointe vers la pièce physique au travers de la surface transparente.

Les opérations supplémentaires suivantes peuvent être prévues, consistant à :
- calculer en temps réel, lors de l'application de l'enduit, un tracé réel d'application de l'enduit, correspondant à une projection, sur la pièce de carrosserie, de la trajectoire suivie par la buse ;
- restituer en temps réel sur la pièce de carrosserie, lors de l'application de l'enduit, une image du tracé réel ainsi calculé.

De même, les opérations supplémentaires suivantes peuvent être prévues :
- identification de décalages entre le tracé réel et le tracé théorique ;
- affichage en temps réel des décalages identifiés ;
- correction de la trajectoire pour la buse, en fonction des décalages identifiés.

D'autres objets et avantages de l'invention apparaîtront à la lumière de la description d'un mode de réalisation, faite ci-après en référence aux dessins annexés dans lesquels :
- la figure 1 est une vue en perspective montrant un poste d'enduction d'une carrosserie de véhicule automobile ;
- la figure 2 est une vue, à échelle agrandie, d'un détail de la figure 1.

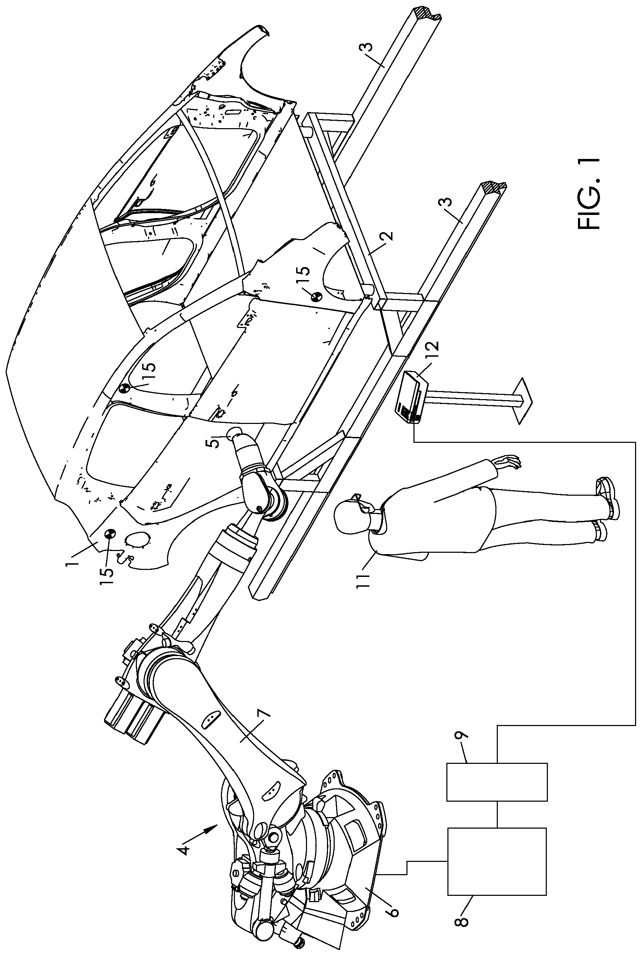

Sur la figure 1 est représenté un poste d'enduction d'une pièce **1** de carrosserie d'un véhicule automobile, lors d'une phase de mise au point préalable à la mise en série. L'enduit utilisé peut notamment être une peinture ou un produit d'étanchéité.

Comme on peut le voir, la pièce **1** de carrosserie est montée sur un support **2** (ici un chariot) qui peut être fixe ou, comme dans l'exemple illustré, monté coulissant sur un guide, formé par exemple par une paire de rails **3.**

La pièce **1** de carrosserie peut être un élément monobloc (il peut s'agir d'une caisse, de portes latérales, d'un capot, d'un volet de coffre, etc.) ou formée par un assemblage d'éléments ; il peut notamment s'agir d'une carrosserie partielle (comme dans l'exemple illustré, où la pièce **1** comprend une caisse et des portes latérales mais est dépourvue de capot et de volet de coffre) ou complète.

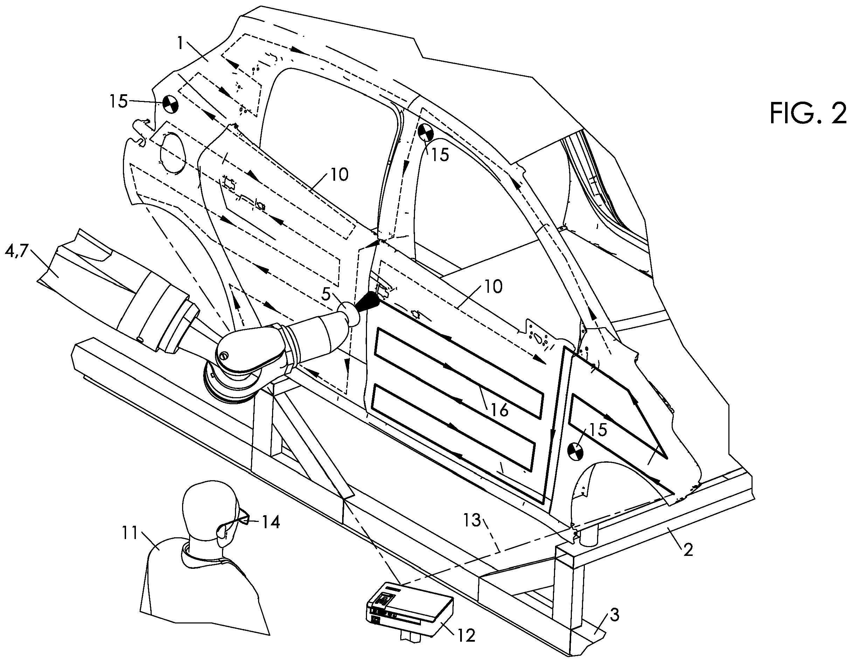

L'application de l'enduit sur la pièce **1** est réalisée au moyen d'un (ou plusieurs) robot(s) **4** équipé(s) d'une buse **5** pour la pulvérisation de l'enduit sur la pièce **1** de carrosserie. Dans l'exemple illustré sur la figure 1, le robot **4** est multiaxes, et comprend un socle **6** sur lequel est monté un bras **7** articulé à une extrémité duquel est montée la buse **5.** La buse **5** projette l'enduit sous forme, globalement, d'un cône que l'on a matérialisé en noir sur la figure 2.

Le robot **4** est piloté via un API (automate programmable industriel) **8**, qui peut être déporté, en étant par exemple situé dans un local de commande. Plusieurs robots peuvent être pilotés via un même API.

L'application de l'enduit sur la pièce **1** n'est pas réalisée directement, mais comprend plusieurs opérations visant à déterminer une trajectoire optimale pour la buse **5.**

Ainsi, une première opération consiste à déterminer sur la pièce **1** un tracé théorique pour l'application de l'enduit. Cette opération peut être réalisée au moyen d'un outil de simulation numérique, typiquement dans un environnement virtuel de conception assistée par ordinateur (CAO), dans lequel le tracé théorique est réalisé sur une représentation virtuelle (avatar) tridimensionnelle de la pièce **1.**

Ce tracé théorique, mémorisé dans une unité **9** centrale d'ordinateur, se présente sous forme d'une ligne localement courbe, droite ou brisée, qui s'étend sur la surface à enduire de la pièce **1** de carrosserie de telle sorte que le balayage du tracé par un disque d'enduit correspondant à l'intersection du cône de projection de la buse avec la surface à enduire couvre la totalité de cette surface. La taille du disque de d'enduit variant avec la distance de la buse **5** à la pièce **1** de carrosserie, on comprend que la prise en compte de cette distance et de l'ouverture angulaire du cône de projection est nécessaire dans la détermination du tracé théorique.

Une deuxième opération consiste à calculer pour la buse **5** une trajectoire en regard du tracé théorique ainsi déterminé. Cette trajectoire n'est pas nécessairement une translation spatiale du tracé théorique d'une valeur correspondant à la distance supposée de la buse **5** à la surface de la pièce **1** de carrosserie. En effet, le mode de programmation des robots multiaxes impose généralement de programmer un nuage limité de points, l'API **8** calculant une trajectoire interpolée minimisant les distances et/ou maximisant la vitesse de déplacement du robot **4**, aux fins de productivité.

Il en résulte que la trajectoire calculée pour la buse **5** ne recouvre que partiellement le tracé théorique, ce qui nécessite une mise au point ultérieure permettant d'optimiser l'application de l'enduit.

Afin de faciliter cette mise au point, il est prévu une opération consistant à restituer sur la pièce **1** de carrosserie, lors de l'application de l'enduit, une image **10** du tracé théorique pour permettre sa visualisation par un opérateur **11** (appelé trajectoiriste) chargé d'effectuer la mise au point.

Dans le contexte de cette restitution, l'expression « pièce de carrosserie » ne renvoie pas nécessairement à la pièce physique elle-même dans le monde réel, mais peut également désigner une image de celle-ci, comme nous allons le voir.

Selon un premier mode de réalisation, la restitution est effectuée directement sur la pièce **1** physique de carrosserie, au moyen d'un appareil **12** de projection d'images (ou projecteur) placé en regard de celle-ci et dont le champ **13** (matérialisé en trait mixte sur la figure 2) englobe (au moins partiellement, et de préférence totalement) la pièce **1.** Le projecteur **12** est par exemple relié à l'unité **9** centrale, qui lui adresse un flux vidéo dans lequel l'image **10** du tracé théorique est adaptée à la position relative du projecteur **12** et de la pièce **1.** Ainsi, dans le cas (illustré) où le projecteur **12** n'est pas placé dans une position frontale face à la pièce **1** mais décalée par rapport à celle-ci (vers le haut, vers le bas, l'avant et/ou l'arrière), une opération de programmation préalable est réalisée pour transformer l'image du tracé par un procédé d'anamorphose de telle sorte que le tracé restitué sur la pièce **1** corresponde effectivement au tracé théorique sans distorsion majeure due à l'angle de projection.

Selon un deuxième mode de réalisation, la restitution est effectuée indirectement sur la pièce **1** physique de carrosserie dans un environnement de réalité augmentée, par une technique d'incrustation d'image.

Ainsi, l'image du tracé peut être restituée par superposition sur une image de la pièce **1** physique, filmée au moyen d'une caméra. En d'autres termes, la pièce **1** physique est filmée (de préférence en plan fixe) tout au long de l'application de l'enduit, son image restituée sur un écran de contrôle (par exemple sur un écran d'ordinateur ou sur une tablette informatique portative), et l'image du tracé est superposée à l'image de la pièce ainsi restituée.

En variante, l'image **10** du tracé théorique est restituée par projection sur une surface **14** transparente au travers de laquelle est visible la pièce **1** physique de carrosserie, de sorte à être superposée à celle-ci du point de vue du trajectoiriste, dont le regard pointe vers la pièce **1** physique au travers de la surface transparente. En pratique, cette surface **14** est par exemple un verre de lunette. Cet exemple de réalisation est illustré sur la figure 2, et l'on suppose alors que la représentation que l'on a faite de la pièce **1** de carrosserie est telle que la perçoit le trajectoiriste **11** (en supposant absent le projecteur **12** représenté pour le premier mode de réalisation décrit ci-dessus).

La pièce **1** physique est de préférence munie de marqueurs **15** passifs destinés à permettre :
- dans le premier mode de réalisation, la projection de l'image **10** du tracé théorique à l'endroit où se trouve effectivement la pièce **1**,
- dans le deuxième mode de réalisation, de positionner spatialement le référentiel associé à la pièce **1** et de caler sur celui-ci le référentiel associé au tracé théorique.

On a représenté sur les figures de tels marqueurs **15** sous forme classique de pastilles à quadrants noirs. Une alternative possible consiste à peut filmer la pièce **1** et effectuer une reconnaissance de forme pour localiser la pièce **1** (avec son orientation) dans l'espace.

Sur la figure 2, l'image **10** du tracé théorique apparaît en pointillés, le sens de déplacement de la buse **5** étant matérialisé par des flèches.

Le robot **4** est piloté pour faire suivre à la buse **5** la trajectoire calculée et appliquer l'enduit sur la pièce **1** de carrosserie.

La restitution (directe ou indirecte) du tracé théorique sur la pièce **1** de carrosserie permet au trajectoiriste d'effectuer dans l'API **8** du robot **4** les modifications de programme qu'il estime nécessaire pour corriger la trajectoire suivie par la buse **5** lors de l'application de l'enduit de sorte à la recaler sur le tracé théorique ainsi restitué. Cette restitution facilite le recalage et donc la mise au point d'une trajectoire optimale.

Il est possible d'assister le trajectoiriste dans cette correction en lui permettant de visualiser en outre la trajectoire réellement suivie par la buse **5.**

Ainsi, on peut adjoindre aux opérations précitées une première opération supplémentaire consistant à calculer en temps réel, lors de l'application de l'enduit, un tracé réel d'application de l'enduit, correspondant à une projection, sur la pièce **1** de carrosserie, de la trajectoire effectivement suivie par la buse **5**, puis une deuxième opération supplémentaire consistant à restituer en temps réel sur la pièce **1** de carrosserie, lors de l'application de l'enduit, une image **16** du tracé réel ainsi calculé. Cette restitution est réalisée dans les mêmes conditions que celle de l'image **10** du tracé théorique.

Sur la figure 2, l'image **16** du tracé réel est matérialisée par un trait plein épais.

La superposition de l'image **16** du tracé réel et de l'image **10** du tracé théorique facilite l'identification de décalages entre eux. Cette identification peut être réalisée au jugé par le trajectoiriste **11.** Cependant, il est également envisageable d'afficher en temps réel (notamment sur la pièce **1** de carrosserie) les décalages identifiés. Cet affichage peut être réalisé sous condition, par exemple dès lors qu'un écart seuil prédéterminé est dépassé, par exemple de l'ordre de 10 mm. L'affichage peut comprendre la valeur de l'écart calculé entre le tracé réel et le tracé théorique au point de décalage identifié, de sorte à faciliter la correction de la trajectoire par le trajectoiriste **11.**

Le trajectoiriste **11** est alors en mesure de corriger facilement la trajectoire pour la buse **5** en fonction des décalages identifiés.

On minimise ainsi les corrections effectuées au jugé.

## Revendications

1. Procédé d'application d'un enduit sur une pièce (**1**) de carrosserie de véhicule automobile au moyen d'un robot (**4**) équipé d'une buse (**5**) pour la pulvérisation de l'enduit, ce procédé comprenant les opérations consistant à :
- déterminer sur la pièce (**1**) un tracé théorique pour l'application de l'enduit ;
- calculer pour la buse (**5**) une trajectoire en regard du tracé ainsi déterminé ;
- piloter le robot (**4**) pour faire suivre à la buse la trajectoire ainsi calculée ;
ce procédé étant **caractérisé en ce qu'**il comprend en outre une opération consistant à restituer sur la pièce (**1**) de carrosserie, lors de l'application de l'enduit, une image (**10**) du tracé théorique.

2. Procédé selon la revendication 1, **caractérisé en ce que** l'image (**10**) du tracé théorique est restituée directement sur la pièce (**1**) physique de carrosserie, au moyen d'un appareil de projection d'images placé en regard de celle-ci.

3. Procédé selon la revendication 1, **caractérisé en ce que** l'image (**10**) du tracé théorique est restituée indirectement sur la pièce (**1**) physique de carrosserie dans un environnement de réalité augmentée, par une technique d'incrustation d'image.

4. Procédé selon la revendication 3, **caractérisé en ce que** l'image (**10**) du tracé théorique est restituée par superposition sur une image de la pièce (**1**) physique de carrosserie, filmée au moyen d'une caméra.

5. Procédé selon la revendication 3, **caractérisé en ce que** l'image (**10**) du tracé théorique est restituée par projection sur une surface (**14**) transparente au travers de laquelle est visible la pièce (**1**) physique de carrosserie, de sorte à être superposée à celle-ci du point de vue d'un observateur (**11**) dont le regard pointe vers la pièce (**1**) physique au travers de la surface (**14**) transparente.

6. Procédé selon la revendication 5, **caractérisé en ce que** la surface (**14**) est un verre de lunette.

7. Procédé selon l'une des revendications 1 à 6, **caractérisé en ce qu'**il comprend les opérations consistant à :
- calculer en temps réel, lors de l'application de l'enduit, un tracé réel d'application de l'enduit, correspondant à une projection, sur la pièce (**1**) de carrosserie, de la trajectoire suivie par la buse (**5**) ;
- restituer en temps réel sur la pièce (**1**) de carrosserie, lors de l'application de l'enduit, une image (**16**) du tracé réel ainsi calculé.

8. Procédé selon la revendication 7, **caractérisé en ce qu'**il comprend l'identification de décalages entre le tracé réel et le tracé théorique.

9. Procédé selon la revendication 8, **caractérisé en ce qu'**il comprend l'affichage en temps réel des décalages identifiés.

10. Procédé selon la revendication 8 ou la revendication 9, **caractérisé en ce qu'**il comprend une opération de correction de la trajectoire pour la buse (**5**), en fonction des décalages identifiés.

## Patentansprüche

1. Verfahren zum Aufbringen einer Beschichtung auf einem Kraftfahrzeugkarosserieteil (1) mittels eines Roboters (4), der mit einer Düse (5) für das Zerstäuben der Beschichtung ausgestattet ist, wobei das Verfahren die Vorgänge umfasst, die aus Folgendem bestehen:
- Bestimmen auf dem Teil (1) eines theoretischen Verlaufs für das Aufbringen der Beschichtung;
- Berechnen einer Bahn gegenüber dem derart bestimmten Verlauf für die Düse (5);
- Steuern des Roboters (4), um die Düse der derart berechneten Bahn folgen zu lassen;
wobei das Verfahren **dadurch gekennzeichnet ist, dass** es außerdem einen Vorgang umfasst, der darin besteht, auf dem Karosserieteil (1) bei dem Aufbringen der Beschichtung ein Bild (10) des theoretischen Verlaufs wiederzugeben.

2. Verfahren nach Anspruch 1, **dadurch gekennzeichnet, dass** das Bild (10) des theoretischen Verlaufs direkt auf dem physischen Karosserieteil (1) mittels eines Bildprojektionsgeräts, das diesem gegenüber platziert wird, wiedergegeben wird.

3. Verfahren nach Anspruch 1, **dadurch gekennzeichnet, dass** das Bild (10) des theoretischen Verlaufs indirekt auf dem physischen Karosserieteil (1) in einer Umgebung mit erweiterter Realität durch eine Bild-in-Bild-Technik wiedergegeben wird.

4. Verfahren nach Anspruch 3, **dadurch gekennzeichnet, dass** das Bild (10) des theoretischen Verlaufs durch Überlagerung auf einem Bild des physischen Karosserieteils (1), das mittels einer Kamera gefilmt wird, wiedergegeben wird.

5. Verfahren nach Anspruch 3, **dadurch gekennzeichnet, dass** das Bild (10) des theoretischen Verlaufs durch Projektion auf einer durchsichtigen Oberfläche (14) durch welche hindurch das physische Karosserieteil (1) sichtbar ist, derart wiedergegeben wird, dass es auf diesem aus der Sicht eines Beobachters (11), dessen Blick zu dem physischen Teil (1) durch die durchsichtige Oberfläche (14) hindurch gerichtet ist, überlagert wird.

6. Verfahren nach Anspruch 5, **dadurch gekennzeichnet, dass** die Oberfläche (14) ein Brillenglas ist.

7. Verfahren nach einem der Ansprüche 1 bis 6, **dadurch gekennzeichnet, dass** es die Vorgänge, die aus Folgendem bestehen, umfasst:
- Berechnen in Echtzeit, während des Aufbringens der Beschichtung, eines realen Aufbringungsverlaufs der Beschichtung, der einer Projektion der Bahn, der die Düse (5) folgt, auf das Karosserieteil (1) entspricht;
- Wiedergabe in Echtzeit auf dem Karosserieteil (1) eines Bilds (16) des derart berechneten Verlaufs bei der Aufbringung der Beschichtung.

8. Verfahren nach Anspruch 7, **dadurch gekennzeichnet, dass** es die Identifikation von Verschiebungen zwischen dem realen Verlauf und dem theoretischen Verlauf umfasst.

9. Verfahren nach Anspruch 8, **dadurch gekennzeichnet, dass** es das Anzeigen der identifizierten Verschiebungen in Echtzeit umfasst.

10. Verfahren nach Anspruch 8 oder Anspruch 9, **dadurch gekennzeichnet, dass** es einen Korrekturvorgang der Bahn für die Düse (5) in Abhängigkeit von den identifizierten Verschiebungen umfasst.

## Claims

1. A method for application of a coating on a part (1) of the bodywork of a motor vehicle by means of a robot (4) equipped with a nozzle (5) for the spraying of the coating, this method including the operations consisting in:
- determining on the part (1) a theoretical course for the application of the coating;
- calculating for the nozzle (5) a path with respect to the course thus determined;
- guiding the robot (4) so that the nozzle follows the path thus calculated;
this method being **characterized in that** it further includes an operation consisting in reproducing on the bodywork part (1), during the application of the coating, an image (10) of the theoretical course.

2. The method according to Claim 1, **characterized in that** the image (10) of the theoretical course is reproduced directly on the physical bodywork part (1), by means of an image projection apparatus placed with respect thereto.

3. The method according to Claim 1, **characterized in that** the image (10) of the theoretical course is reproduced indirectly on the physical bodywork part (1) in an augmented reality environment, by a picture-in-picture technique.

4. The method according to Claim 3, **characterized in that** the image (10) of the theoretical course is reproduced by superposition on an image of the physical bodywork part (1), filmed by means of a camera.

5. The method according to Claim 3, **characterized in that** the image (10) of the theoretical course is reproduced by projection on a transparent surface (14) through which the physical bodywork part (1) is visible, so as to be superposed thereto from the point of view of an observer (11), whose gaze points towards the physical part (1) through the transparent surface (14).

6. The method according to Claim 5, **characterized in that** the surface (14) is a spectacle lens.

7. The method according to one of Claims 1 to 6, **characterized in that** it includes the operations consisting in:
- calculating in real time, during the application of the coating, a real course of application of the coating, corresponding to a projection, on the bodywork part (1), of the path followed by the nozzle (5);
- reproducing in real time on the bodywork part (1), during the application of the coating, an image (16) of the real course thus calculated.

8. The method according to Claim 7, **characterized in that** it includes the identification of offsets between the real course and the theoretical course.

9. The method according to Claim 8, **characterized in that** it includes the display in real time of the identified offsets.

10. The method according to Claim 8 or Claim 9, **characterized in that** it includes an operation of correction of the path for the nozzle (5), as a function of the identified offsets.
